# EUROPEAN PATENT SPECIFICATION

(11) **EP 4 462 570 B1**
(45) Date of publication and mention of the grant of the patent: **11.03.2026**
(21) Application number: 24174362.4
(22) Date of filing: 06.05.2024
(51) Int. Cl.: H01M 50/264, H01M 50/209, H01M 50/249, H01M 50/291

(54) **A BATTERY PACK, A METHOD AND A VEHICLE**
BATTERIEPACK, VERFAHREN UND FAHRZEUG
BLOC-BATTERIE, PROCÉDÉ ET VÉHICULE

(30) Priority: 09.05.2023 EP 23172340
(43) Date of publication of application: 13.11.2024
(73) Proprietor: VOLVO TRUCK CORPORATION, 405 08 Göteborg (SE)
(72) Inventor: Arnesson, Simon, 475 32 Öckerö (SE); Rout, Dhirendra, 422 54 Göteborg (SE)
(74) Representative: Kransell & Wennborg KB

(56) References cited:
- US-A1- 2016 190 526
- US-A1- 2018 029 493

## Description

### TECHNICAL FIELD

The disclosure relates generally to battery packs. In particular aspects, the disclosure relates to a battery pack, a method, and to a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack which may be used for powering electric traction motors for a vehicle is typically large and heavy. The battery pack comprises a plurality of electrically connected battery cells. The battery cells may be arranged in a plurality of battery modules, and the battery modules may be arranged in a housing of the battery pack.

US 2016/190526 A1 relates to an electricity storage module which includes a storage cell group, first and second end plates, a first restraining band, a second restraining band, and at least one intermediate plate. US 2018/029493 A1 relates to a battery pack for an electric motor and comprises a base plate and a plurality of rectangular battery modules positioned laterally one next to another.

There is a strive to develop improved technology relating to battery packs, for example battery packs for vehicles, such as technology which is cost-effective, beneficial for manufacturing, and/or space saving.

### SUMMARY

According to the invention, also referred to as a first aspect of the disclosure, there is provided a battery pack, the battery pack having a longitudinal extension in a longitudinal direction, a width extension in a width direction, and a height extension in a height direction. The battery pack comprises:
- a plurality of battery modules, wherein each battery module comprises a plurality of battery cells, wherein the plurality of battery cells of each battery module are stacked one after the other in a stacking direction,
- a housing, wherein the housing comprises a first side wall and a second side wall having a respective extension in the longitudinal direction and the height direction, and wherein the first and second side walls are offset from each other in the width direction such that they define a space therebetween for storing the plurality of battery modules,
- at least one first pair of side support members for carrying at least one of the battery modules in the housing, wherein each side support member of the least one first pair of side support members is an elongated member having an extension in the longitudinal direction and being associated with a respective one of the first and second side walls, and wherein each side support member of the least one first pair of side support members is releasably attached to the respective one of the first and second side walls. The first aspect of the disclosure may seek to provide a cost-effective and/or compact configuration which may be beneficial for manufacturing. A technical benefit may include that assembly of the battery pack is facilitated. For example, when the at least one first pair of releasably attached side support members is not attached to the housing, it may allow another battery module to be inserted into the housing without interfering with the housing. A technical benefit may additionally or alternatively include that a compact battery pack configuration is achieved, such as a battery pack having relatively thin walls and/or a battery pack with a compact packaging.

Optionally in some examples, including in at least one preferred example, the stacking direction extends along the width direction of the battery pack. A technical benefit may include that a large amount of battery cells can be provided in the housing in a space-efficient manner. This may imply a compact battery pack with high energy density.

Optionally in some examples, including in at least one preferred example, at least one pair of the at least one first pair of side support members carries a plurality of said battery modules, wherein the plurality of said battery modules carried by the at least one pair of the at least one first pair of side support members are arranged one after the other along the longitudinal direction. A technical benefit may include that a large amount of battery modules can be provided in the housing in a space-efficient manner. This may imply a compact battery pack with high energy density.

Optionally in some examples, including in at least one preferred example, each side support member of the least one first pair of side support members is releasably attached to the respective one of the first and second side walls by use of at least one mechanical fastener. For example, the at least one mechanical fastener may be at least one rivet and/or screw. A technical benefit may include a facilitated assembly procedure which is cost-effective. A mechanical fastener may also imply a robust and reliable connection to the housing.

Optionally in some examples, including in at least one preferred example, a connection direction of the at least one mechanical fastener extends along the width direction. A technical benefit may include a reliable and robust connection.

Optionally in some examples, including in at least one preferred example, at least one of the first and second side walls comprises a support section for the side support member which is associated with the at least one of the first and second side walls, wherein the support section is configured to guide the side support member and/or to be a load bearing support for the side support member, wherein the support section has an extension in the longitudinal direction. A technical benefit may include that it may be easier for an operator and/or an assembly robot to find the correct position for the side support member. A technical benefit may additionally or alternatively include that it provides a reliable and robust connection of the side support member to the housing.

Optionally in some examples, including in at least one preferred example, the side support member which is associated with the at least one of the first and second side walls is releasably attached thereto by use of the support section. A technical benefit may include that the support section provides an attachment interface which prevents the side support member from being unintentionally released from the housing. For example, the support section may prevent the side support member from being released from the housing in a direction corresponding to the width direction.

Optionally in some examples, including in at least one preferred example, the support section is configured to position the side support member, which is associated with the at least one of the first and second side walls, in a predefined position in the height direction. A technical benefit may include that the predefined position may facilitate packaging of the battery cells in the housing. For example, this may imply a fast and efficient assembly procedure in which the battery cells are packaged in a compact manner in the housing.

Optionally in some examples, including in at least one preferred example, the support section is in the form of a recess, a ledge, and/or a hook.

Optionally in some examples, including in at least one preferred example, each side support member of the at least one first pair of side support members is releasably attached to the respective one of the first and second side walls by use of an adhesive. A technical benefit may include a fast procedure for attaching the at least one first pair of side support members to the housing.

Optionally in some examples, including in at least one preferred example, the battery pack is configured such that each one of the plurality of battery modules is insertable into and/or removable from the housing in a mounting/dismounting direction which extends along the height direction, such as insertable into and/or removable from the housing from above in the height direction. A technical benefit may include a facilitated assembly procedure of the battery pack.

Optionally in some examples, including in at least one preferred example, the battery pack is configured such that each one of the plurality of battery modules is insertable into and/or removable from the housing in a mounting/dismounting direction which extends along the height direction and such that the at least one first pair of side support members which carries or is intended to carry the respective battery module can be kept in an attached state to the first and second side walls while inserting and/or removing the respective battery module to/from the housing. A technical benefit may include a facilitated assembly procedure of the battery pack. For example, time required to assemble the battery pack may be reduced since the battery modules can be provided one after the other on the at least one first pair of side support members which already are attached to the side walls.

Optionally in some examples, including in at least one preferred example, the battery pack comprises at least two separate levels of battery modules which are stacked on top of each other in the housing, as seen in the height direction. This may imply a compact configuration.

Optionally in some examples, including in at least one preferred example, at least one level of the at least two separate levels of battery modules, such as each level or at least a level being above another level as seen in the height direction, is carried in the housing by a respective pair of the at least one first pair of side support members.

Optionally in some examples, including in at least one preferred example, the battery pack further comprises a second pair of side support members for carrying at least one of the battery modules in the housing, wherein each side support member of the second pair of side support members is permanently attached to, such as integrated with, a respective one of the first and second side walls. A technical benefit may include a reduced need of using side support members configured according to the at least one first pair of side support members. This may imply fewer parts, which in turn may imply facilitated manufacturing of the battery pack.

Optionally in some examples, including in at least one preferred example, the second pair of side support members is configured to carry a lowest level of the at least two separate levels of battery modules, as seen in the height direction.

Optionally in some examples, including in at least one preferred example, each side support member of the second pair of side support members is in the form of a step surface of the respective one of the first and second side walls.

According to the invention, the battery pack further comprises at least one beam element associated with at least one of the plurality of battery modules, wherein the at least one beam element has an extension in the width direction between end sections thereof, wherein the at least one beam element is supported via its end sections by the at least one first pair of side support members. A technical benefit may include a robust configuration for holding the battery cells in the housing. The at least one beam element is preferably part of the associated battery module.

Optionally in some examples, including in at least one preferred example, the at least one beam element is supported via its end sections by respective top surfaces of the at least one first pair of side support members. A technical benefit may include that the associated battery module can be easily inserted and/or removed to/from the housing without releasing/removing the at least one first pair of side support members from the housing.

According to the invention, the at least one beam element is supported via its end sections by respective top surfaces of the at least one first pair of side support members such that the associated battery module can be released and removed from the at least one first pair of side support members together with the at least one beam element when the at least one first pair of side support members are kept in an attached state to the first and second side walls.

Optionally in some examples, including in at least one preferred example, when also the stacking direction extends along the width direction of the battery pack, the battery pack comprises a pair of said at least one beam element, wherein each beam element of the at least one pair of said at least one beam element is provided on a respective lateral side of the plurality of stacked battery cells of the associated battery module, as seen with respect to the width direction. A technical benefit may include that a reliable and robust battery module is provided which can easily be inserted and removed to/from the housing.

Optionally in some examples, including in at least one preferred example, the at least one beam element is releasably attached to the at least one first pair of side support members, such as by use of at least one mechanical fastener. For example, the at least one mechanical fastener may be at least one rivet and/or screw.

Optionally in some examples, including in at least one preferred example, a connection direction of the at least one mechanical fastener extends along the height direction. A technical benefit may include that the connection direction allows an operator and/or an assembly robot to easily reach and connect/disconnect the at least one mechanical fastener.

According to a second aspect of the disclosure, there is provided a method for assembling a battery pack according to any one of the examples of the first aspect of the disclosure, the method comprising:
- attaching a primary pair of the at least one first pair of side support members to the first and second side walls at a first position in the housing, as seen in the height direction,
- inserting at least one battery module into the housing such that the at least one battery module reaches the first position in the housing and such that the at least one battery module is carried by the primary pair of the at least one first pair of side support members. The second aspect of the disclosure may seek to provide cost-effective manufacturing of the battery pack. A technical benefit may include that assembly of the battery pack is facilitated. For example, when the primary pair of the at least one first pair of releasably attached side support members is not attached to the housing, it may allow another battery module to be inserted into the housing without interfering with the primary pair of the at least one first pair of releasably attached side support members. A technical benefit may additionally or alternatively include that a compact battery pack configuration is achieved.

Optionally in some examples, including in at least one preferred example, the method further comprises:
- subsequently to inserting the at least one battery module into the housing, attaching a secondary pair of the at least one first pair of side support members to the first and second side walls at a second position in the housing which is above the first position, as seen in the height direction,
- inserting at least one battery module into the housing such that the at least one battery module reaches the second position in the housing and such that the at least one battery module is carried by the secondary pair of the at least one first pair of side support members. A technical benefit may include that the battery modules are stacked on top of each other in a fast, reliable, robust, and space saving manner.

According to a third aspect of the disclosure, there is provided a vehicle comprising a battery pack according to any one of the examples of the first aspect of the disclosure. The vehicle may be a fully electric vehicle or a hybrid vehicle also comprising a combustion engine. Electric power for driving the vehicle may at least partly be provided from the battery pack. By way of example, the vehicle may additionally comprise a fuel cell system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle shown in a side view according to an example.
**FIG. 2** is an exemplary battery pack shown in a sectional view according to an example.
**FIG. 3** is an exemplary housing of a battery pack shown in perspective view according to an example.
**FIG. 4** is an exemplary battery pack shown in perspective view according to an example.
**FIG. 5** is an exemplary portion of a battery pack shown in an enlarged perspective view according to an example.
**FIG. 6** is another exemplary portion of a battery pack shown in an enlarged perspective view according to an example.
**FIG. 7** is another exemplary battery pack shown in a sectional view according to an example.
**FIG. 8** is a flowchart of a method according to an example of the disclosure.
**FIG. 9** is another sectional view of a battery pack according to the disclosure.

The drawings are not necessarily drawn to scale. It shall also be noted that some details in the drawings may be exaggerated in order to better describe and illustrate the particular example. Like reference characters refer to like elements throughout the description, unless expressed otherwise.

### DETAILED DESCRIPTION

The detailed description set forth below provides information and examples of the disclosed technology with sufficient detail to enable those skilled in the art to practice the disclosure.

The present disclosure may seek to provide a battery pack which is cost-effective, beneficial for manufacturing, and/or compact. Accordingly, an object of the present disclosure may be to provide a battery pack which alleviates at least one drawback of the prior art, or which at least provides a suitable alternative. Another object of the present disclosure may be to provide an improved method for assembling a battery pack which alleviates at least one drawback of the prior art, or which at least provides a suitable alternative. A yet further object of the present disclosure may be to provide an improved vehicle which alleviates at least one drawback of the prior art, or which at least provides a suitable alternative.

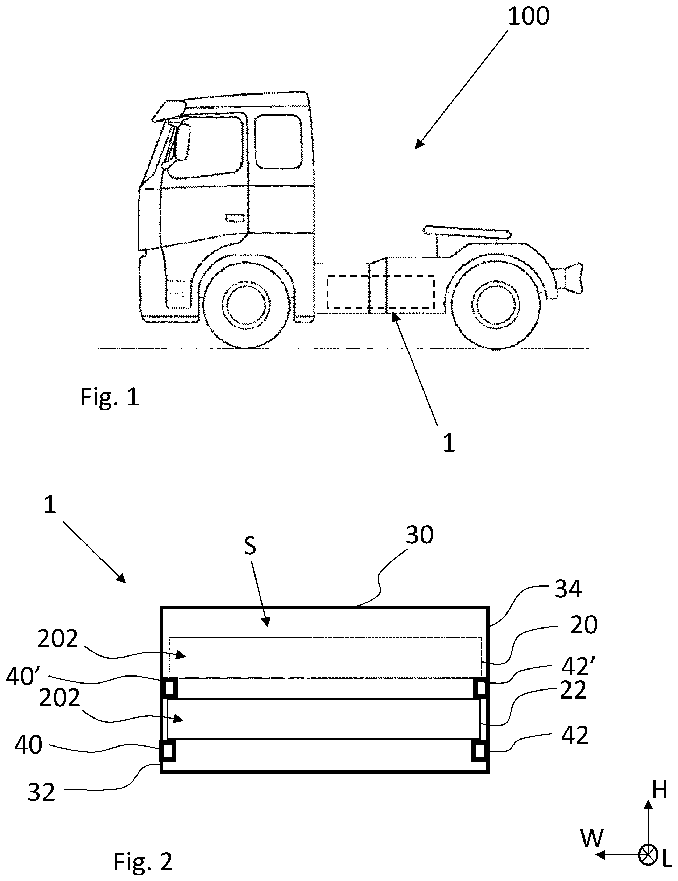

**FIG. 1** is an exemplary vehicle 100 shown in a side view according to an example. The vehicle 100 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 100 may be driven by a user (not shown) and/or be at least partly automatically driven, i.e., it may be a vehicle comprising autonomous driving capabilities. The vehicle 100 comprises a battery pack 1 (indicated by a box with dashed lines). The battery pack 1 is typically used for providing electric power to one or more electric motors (not shown) which are arranged to generate propulsion force for driving the vehicle 100. Accordingly, the vehicle 100 is typically a fully electric vehicle or a hybrid vehicle.

**FIG. 2** is an exemplary battery pack 1 shown in a sectional view according to an example. The battery pack 1 may for example be the battery pack 1 as shown in FIG. 1. In other examples, the battery pack 1 may be used for another application except a vehicle, such as a container. Accordingly, in some examples, the battery pack 1 as disclosed herein may be used in stationary implementations. The battery pack 1 has a longitudinal extension in a longitudinal direction L, a width extension in a width direction W, and a height extension in a height direction H. The directions L, W and H herein are perpendicular to each other. By way of example, the height direction H may correspond to a height direction of the vehicle 100 when the vehicle 100 is provided on a flat horizontally extending surface. The battery pack 1 comprises a plurality of battery modules 20, 22, wherein each battery module 20, 22 comprises a plurality of battery cells 202. The plurality of battery cells 202 of each battery module are stacked one after the other in a stacking direction. The battery pack 1 further comprises a housing 30. The housing 30 comprises a first side wall 32 and a second side wall 34 having a respective extension in the longitudinal direction L and the height direction H, and the first and second side walls 32, 34 are offset from each other in the width direction W such that they define a space S therebetween for storing the plurality of battery modules 20, 22.

The battery pack 1 further comprises at least one first pair of side support members 40, 42 for carrying at least one of the battery modules 20, 22 in the housing 30. In the example shown in FIG. 2, there are two pairs of side support members 40, 42, and 40', 42'. It shall however be noted that the present disclosure relates to battery packs comprising one or more pairs of side support members according to examples disclosed herein. Each side support member 40, 42 of the least one first pair of side support members 40, 42 is an elongated member having an extension in the longitudinal direction L and is associated with a respective one of the first and second side walls 32, 34. Further, each side support member 40, 42 of the least one first pair of side support members 40, 42 is releasably attached to the respective one of the first and second side walls 32, 34. In the shown example, the at least one first pair of side support members 40, 42 may be denoted a primary first pair of side support members 40, 42. Accordingly, the side support members 40', 42' may be denoted a secondary first pair of side support members 40', 42'. Of course, in another example, the side support members 40', 42' may be denoted a primary first pair of side support members and the side support members 40, 42 may be denoted a secondary first pair of side support members. The secondary first pair of side support members 40', 42' are in this example configured in a similar manner as the primary first pair of side support members 40, 42. For example, as shown, each side support member 40, 42, 40', 42', of the at least one first pair of side support members may be formed as a beam member, e.g., a beam member with a substantially square-shaped cross section. Other cross-sectional shapes are also possible, such as an L-shaped, U-shaped, I-shaped, H-shaped, and triangular-shaped cross section.

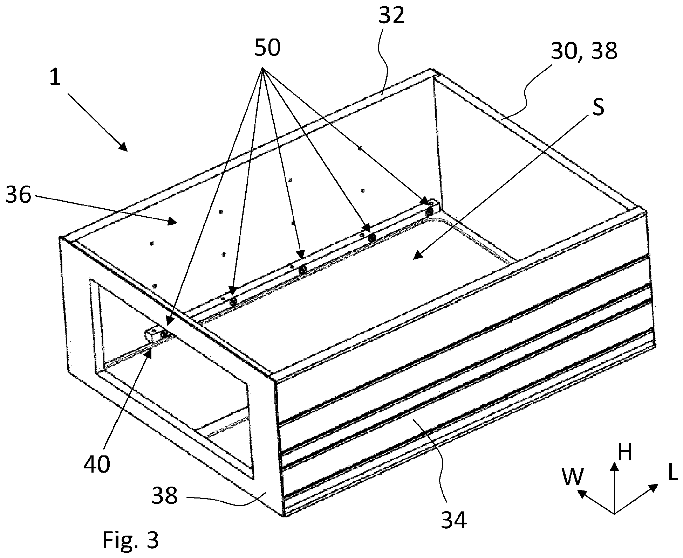

**FIG. 3** is an exemplary housing 30 of a battery pack 1 shown in perspective view. The battery pack 1 may for example be the battery pack 1 shown in FIG. 2. In FIG. 3, only one of the side support members 40, 42 is shown, i.e., the side support member 40. As depicted in FIG. 2, each side support member 40 of the least one first pair of side support members 40, 42 may be releasably attached to the respective one of the first and second side walls 32, 34 by use of at least one mechanical fastener 50. In the shown example, there are five mechanical fasteners 50 for each side support member 40. However, there may be fewer or more mechanical fasteners, e.g., depending on the size of the battery pack 1. As may be gleaned from FIG. 3, a connection direction of the at least one mechanical fastener 50 may extend along the width direction W. In the shown example, the at least one mechanical fastener 50 is a screw or rivet which, when in a connected state, has a longitudinal extension corresponding to the width direction W. It shall be noted that the mechanical fastener may not necessarily be a screw or rivet. For example, the at least one mechanical fastener may be a clip, a stud, a nail, an anchor, or any other fastener for attaching a member to a wall. The housing 30 may as further shown comprise front and rear walls 38 which define the space S. As shown, the housing 30 may have a box-shape.

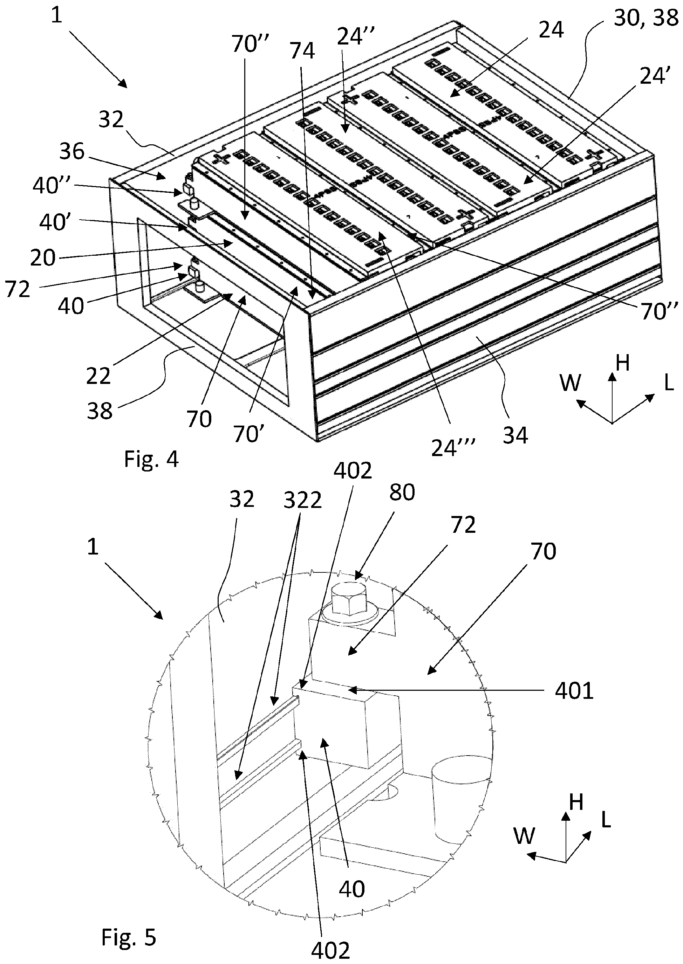

**FIG. 4** is an exemplary battery pack 1 shown in perspective view. For example, the battery pack 1 may comprise the housing 30 as shown in FIG. 3. In the shown example, the battery pack 1 comprises a plurality of battery modules 20, 22, 24, e.g., similar to the battery pack 1 shown in FIG. 2. Accordingly, as shown, the battery pack 1 may comprise at least two separate levels of battery modules 20, 22, 24 which are stacked on top of each other in the housing 30, as seen in the height direction H. In FIG. 4, three separate levels of battery modules 20, 22, 24 are shown. Further, as depicted in FIG. 4, the stacking direction of the battery cells 202 of the respective battery module 20, 22, 24 preferably extends along the width direction W of the battery pack 1. For example, the plurality of battery cells 202 of the respective battery module may be prismatic battery cells which are stacked one after the other along the width direction W.

As further shown in FIG. 4, at least one pair of the at least one first pair of side support members 40" carries a plurality of said battery modules 24'-24''', wherein the plurality of said battery modules 24-24‴ carried by the at least one pair of the at least one first pair of side support members 40'' are arranged one after the other along the longitudinal direction L. In FIG. 4 it is for example shown that the top level comprises a plurality of battery modules 24-24‴ which are arranged one after the other along the longitudinal direction L. More specifically, in the shown example, there are four battery modules 24-24‴ arranged one after the other along the longitudinal direction L. A similar stacking configuration of battery modules may be provided for any one of the levels of battery modules in the housing 30.

At least one level of the at least two separate levels of battery modules 20, 22, 24, such as each level or at least a level being above another level as seen in the height direction H, may be carried in the housing 30 by a respective pair of the at least one first pair of side support members 40, 42, 40', 42', 40". In the example shown in e.g., FIG. 2, a first level of battery modules 22 is carried in the housing 30 by the primary first pair of side support members 40, 42, and a second level of battery modules 20, above the first level of battery modules 22, is carried in the housing 30 by the secondary first pair of side support members 40', 42'.

As may be further gleaned from e.g., FIG. 3 and FIG. 4, the battery pack 1 may be configured such that each one of the plurality of battery modules 20, 22, 24, e.g., each level of battery modules 20, 22, 24, is insertable into and/or removable from the housing 30 in a mounting/dismounting direction which extends along the height direction H, such as insertable into and/or removable from the housing 30 from above in the height direction H. As shown in FIG. 3 and FIG. 4, the housing 30 may comprise an opening 36 at a top portion of the housing 30 which is arranged such that each one of the plurality of battery modules 20, 22, 24 is insertable into and/or removable from the housing 30 via the opening 36 in a mounting/dismounting direction which extends along the height direction H. The opening 36 may be concealed by a cover (not shown) once the plurality of battery modules 20, 22, 24 are inserted into the housing 30.

**FIG. 5** is a portion of a battery pack 1 shown in an enlarged perspective view. For example, the battery pack 1 in FIG. 5 may be the battery pack 1 as shown in FIG. 4. The enlarged perspective view in FIG. 5 depicts the side support member 40 releasably attached to the first side wall 32. As shown, the first side wall 32 may comprise a support section 322 for the side support member 40 which is associated with the first side wall 32. A similar configuration may additionally or alternatively be provided at the second side wall 34 (not shown). The support section 322 is configured to guide the side support member 40 and/or to be a load bearing support for the side support member 40. The support section 322 has an extension in the longitudinal direction L. In the shown example, the support section 322 comprises two rail portions 322, or ledges, which extends in the longitudinal direction L along the first side wall 32, whereby the side support member 40 comprises corresponding recesses 402 in which the rail portions 322 are received. It shall be noted that there may alternatively be only one rail portion or more than two rail portions, i.e. at there may be at least one rail portion or at least two rail portions. The rail portion(s) 322 may thus guide and/or be a load bearing support for the side support member 40. By guiding may for example be meant that a user, such as an operator or an assembly robot, may more easily position the side support member 40 correctly with respect to the first side wall 32. As further shown in e.g., FIG. 5, the support section 322 may be configured to position the side support member 40 which is associated with the at least one of the first and second side walls 32 in a predefined position in the height direction H.

The battery pack 1 may be configured such that each one of the plurality of battery modules 20, 22, 24 is insertable into and/or removable from the housing 30 in a mounting/dismounting direction which extends along the height direction H and such that the at least one first pair of side support members 40, 42, 40', 42', 40" which carries or is intended to carry the respective battery module can be kept in an attached state to the first and second side walls 32, 34 while inserting and/or removing the respective battery module to/from the housing 30.

As may be further gleaned in e.g., FIG. 4 and FIG. 5, the battery pack 1 may further comprise at least one beam element 70 which is associated with at least one of the plurality of battery modules 22. The at least one beam element 70 may be arranged to carry one or more battery modules 22. The at least one beam element 70 may form part of the associated battery module. The at least one beam element 70 has an extension in the width direction W between end sections 72, 74 of the at least one beam element 70. The at least one beam element 70 is supported via its end sections 72, 74 by the at least one first pair of side support members 40, 42. In FIG. 5 it is shown that the at least one beam element 70 may be supported by the side support member 40 in that the at least one beam element 70 is resting on the side support member 40. More specifically, as shown in FIG. 5, the at least one beam element 70 may be supported via its end sections 72, 74 by respective top surfaces 401 of the at least one first pair of side support members 40. This configuration may for example imply a robust connection to the housing 30 and/or reduced heat transfer between housing 30 and the battery modules 22. The other levels of battery modules 20, 24 may as shown in FIG. 4 be associated with similar beam elements 70', 70". Each level of battery modules 20, 22, 24 may be associated with several beam elements which are arranged parallel to each other and offset from each other in the longitudinal direction L. All beam elements may be configured in a similar manner.

By way of example, as may be gleaned in FIG. 4, the battery pack 1 may comprise a pair of said at least one beam element 70", wherein each beam element of the at least one pair of said at least one beam element 70" is provided on a respective lateral side of the plurality of stacked battery cells 202 of the associated battery module 24‴, as seen with respect to the width direction W. This configuration may be provided for each battery module.

In the present invention shown in e.g. FIG. 5, the at least one beam element 70 is supported via its end sections 72, 74 by respective top surfaces 401 of the at least one first pair of side support members 40, 42 such that the associated battery module can be released and removed from the at least one first pair of side support members 40, 42 together with the at least one beam element 70 when the at least one first pair of side support members 40, 42 are kept in an attached state to the first and second side walls 32, 34.

As further depicted in FIG. 5, the at least one beam element 70 may be releasably attached to the at least one first pair of side support members 40, such as by use of at least one mechanical fastener 80. For example, as shown, a connection direction of the at least one mechanical fastener 80 extends along the height direction H, such as shown from above. In the shown example, the mechanical fastener 80 is a screw. However, any other mechanical fastener, as e.g., mentioned herein, may be used. Accordingly, the at least one beam element 70 is connected to the first side wall 32 via the side support member 40. This may e.g., imply that the first side wall 32 may be made thinner compared to if the at least one beam element 70 was directly connected to the first side wall 32. Accordingly, a thin housing configuration may be achieved, implying a space efficient configuration. It shall be noted that a similar configuration is also possible for the other end section 74 of the at least one beam element 70.

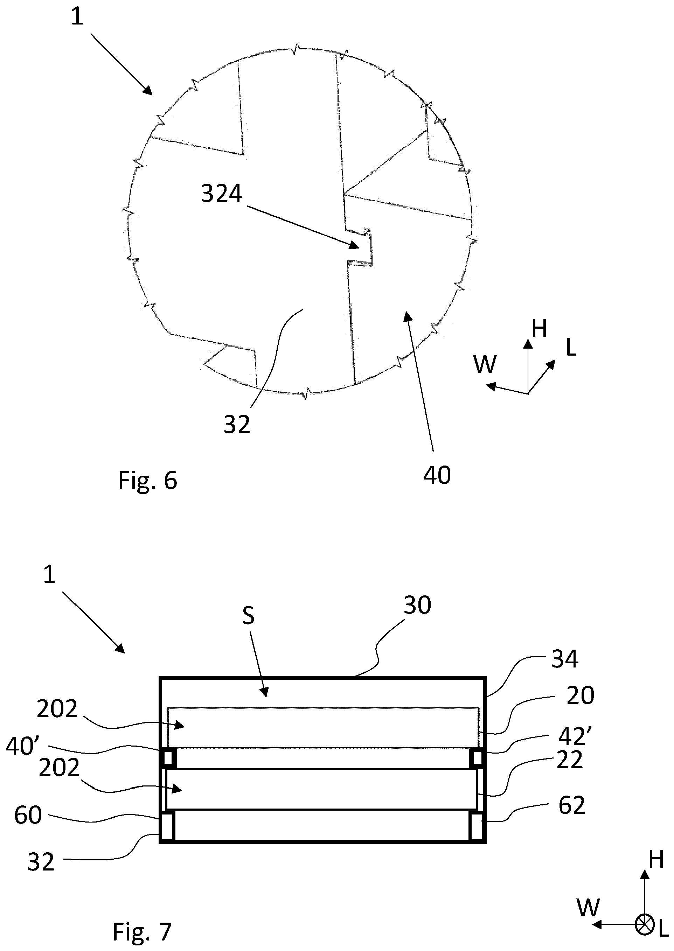

FIG. 6 is another example of a portion of a battery pack 1 shown in an enlarged perspective view. For example, the battery pack 1 in FIG. 6 may be the battery pack 1 as shown in FIG. 4. The enlarged perspective view in FIG. 6, similar to FIG. 5, depicts the side support member 40 releasably attached to the first side wall 32. As shown, the first side wall 32 may comprise a support section 324 for the side support member 40 which is associated with the first side wall 32. A similar configuration may additionally or alternatively be provided at the second side wall 34. Similar to the example shown in FIG. 5, the support section 324 is configured to guide the side support member 40 and/or to be a load bearing support for the side support member 40. The support section 324 also has an extension in the longitudinal direction L along the first side wall 32. In the example shown in FIG. 6, the side support member 40 which is associated with the first side wall 32 is releasably attached thereto by use of the support section 324. More specifically, in this example, when the side support member 40 is releasably attached by use of the support section 324, the side support member 40 is prevented from being released from the first side wall 32 in a direction along the width direction W away from the first side wall 32. To release the side support member 40 it may instead be required to move the side support member 40 in an upward direction along the height direction H and/or by rotating the side support member 40 about an axis extending in the longitudinal direction L. In the example shown in FIG. 6, the support section 324 is in the form of a hook. Additionally or alternatively, as depicted in FIG. 5 and FIG. 6, the support section 322, 324 may be in the form of a ledge. As a yet further example, the support section may be in the form of a recess (not shown).

Additionally, or alternatively, each side support member 40, 42 of the at least one first pair of side support members may be releasably attached to the respective one of the first and second side walls 32, 34 by use of an adhesive.

FIG. 7 is another exemplary battery pack 1 shown in a sectional view. It differs from the battery pack 1 as e.g., shown in FIG. 2, in that it further comprises a second pair of side support members 60, 62 for carrying at least one of the battery modules 22 in the housing 30. Each side support member 60, 62 of the second pair of side support members 60, 62 is permanently attached to, such as integrated with, a respective one of the first and second side walls 32, 34. As shown, the second pair of side support members 60, 62 may be configured to carry a lowest level of the at least two separate levels of battery modules 20, 22, as seen in the height direction H. As further shown, each side support member of the second pair of side support members 60, 62 may be in the form of a step surface of the respective one of the first and second side walls 32, 34.

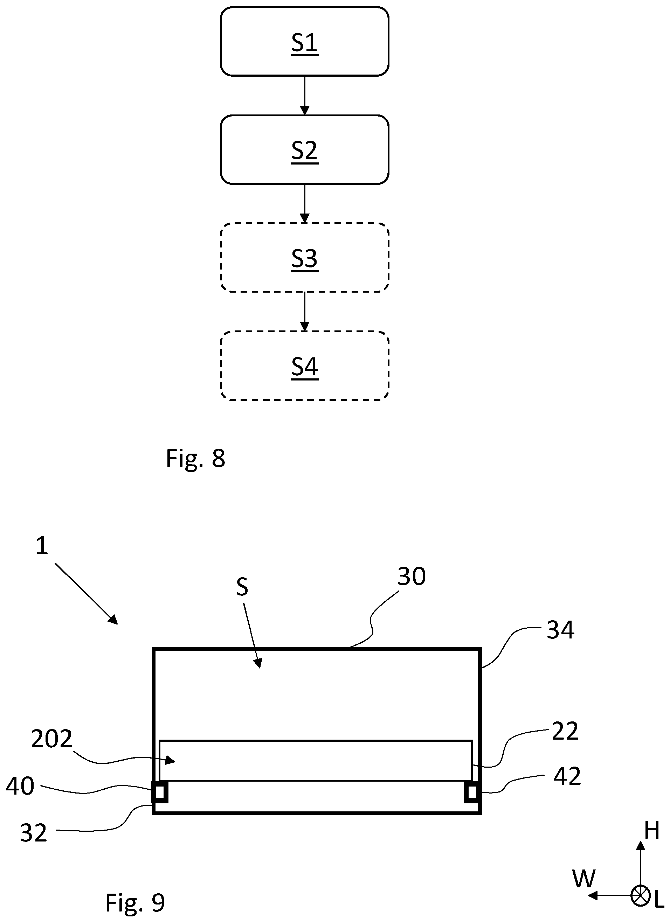

**FIG. 8** is a flowchart of a method for assembling a battery pack 1 according to the first aspect of the disclosure, such as a battery pack 1 as depicted in any one of FIGS. 2-7. Boxes with dashed lines in FIG. 8 indicate optional steps.

The method comprises:
S1: attaching a primary pair of the at least one first pair of side support members 40, 42 to the first and second side walls 32, 34 at a first position in the housing 30, as seen in the height direction H. For example, attaching the primary pair of side support members 40, 42 may comprise attaching the primary pair of side support members 40, 42 by use of the mechanical fasteners 50.

The method further comprises:
S2: inserting at least one battery module 22 into the housing 30 such that the at least one battery module 22 reaches the first position in the housing 30 and such that the at least one battery module 22 is carried by the primary pair of the at least one first pair of side support members 40, 42. For example, inserting at least one battery module 22 into the housing 30 may comprise inserting the at least one battery module 22 by moving the at least one battery module in a direction along the height direction H, e.g., in a downward direction through the opening 36.

With reference to e.g., FIG. 2 and FIG. 8, the method may further comprise:
S3: subsequently to inserting the at least one battery module 22 into the housing 30, attaching a secondary pair of the at least one first pair of side support members 40', 42' to the first and second side walls 32, 34 at a second position in the housing 30 which is above the first position, as seen in the height direction H,
S4: inserting at least one battery module into the housing 20 such that the at least one battery module 20 reaches the second position in the housing 30 and such that the at least one battery module 20 is carried by the secondary pair of the at least one first pair of side support members 40', 42'. The procedure may be continued according to the above until each level of battery modules 20, 22, 24 have been inserted into the housing 30.

As may be understood from the example of the battery pack 1 shown in FIG. 7, one level of battery modules 22, such as the lowest level, may be inserted into the housing 30 without a preceding step of attaching a first pair of side support members.

**FIG. 9** is another view of a battery pack 1 according to the disclosure. The battery pack 1 has a longitudinal extension in a longitudinal direction L, a width extension in a width direction W, and a height extension in a height direction H. The battery pack 1 comprises:
- a plurality of battery modules 22, wherein each battery module 22 comprises a plurality of battery cells 202, wherein the plurality of battery cells 202 of each battery module are stacked one after the other in a stacking direction W,
- a housing 30, wherein the housing 30 comprises a first side wall 32 and a second side wall 34 having a respective extension in the longitudinal direction L and the height direction H, and wherein the first and second side walls 32, 34 are offset from each other in the width direction W such that they define a space S therebetween for storing the plurality of battery modules 22,
- at least one first pair of side support members 40, 42 for carrying at least one of the battery modules 22 in the housing 30, wherein each side support member 40, 42 of the least one first pair of side support members 40, 42 is an elongated member having an extension in the longitudinal direction L and being associated with a respective one of the first and second side walls 32, 34, and wherein each side support member 40, 42 of the least one first pair of side support members 40, 42 is releasably attached to the respective one of the first and second side walls 32, 34.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A battery pack (1), the battery pack (1) having a longitudinal extension in a longitudinal direction (L), a width extension in a width direction (W), and a height extension in a height direction (H), the battery pack (1) comprising:
- a plurality of battery modules (20, 22, 24), wherein each battery module (20, 22, 24) comprises a plurality of battery cells (202), wherein the plurality of battery cells (202) of each battery module are stacked one after the other in a stacking direction (W),
- a housing (30), wherein the housing (30) comprises a first side wall (32) and a second side wall (34) having a respective extension in the longitudinal direction (L) and the height direction (H), and wherein the first and second side walls (32, 34) are offset from each other in the width direction (W) such that they define a space (S) therebetween for storing the plurality of battery modules (20, 22, 24),
- at least one first pair of side support members (40, 42; 40', 42'; 40'') for carrying at least one of the battery modules (20, 22, 24) in the housing (30), wherein each side support member (40, 42; 40', 42'; 40") of the least one first pair of side support members (40, 42; 40', 42'; 40") is an elongated member having an extension in the longitudinal direction (L) and being associated with a respective one of the first and second side walls (32, 34), and wherein each side support member (40, 42; 40', 42'; 40") of the least one first pair of side support members (40, 42; 40', 42'; 40'') is releasably attached to the respective one of the first and second side walls (32, 34),
the battery pack (1) further comprising at least one beam element (70) associated with at least one of the plurality of battery modules (20, 22, 24), wherein the at least one beam element (70) has an extension in the width direction (W) between end sections (72, 74) thereof, wherein the at least one beam element (70) is supported via its end sections (72, 74) by the at least one first pair of side support members (40, 42; 40', 42'; 40"),
wherein the at least one beam element (70) is supported via its end sections (72, 74) by respective top surfaces (401) of the at least one first pair of side support members (40, 42; 40', 42'; 40") such that the associated battery module can be released and removed from the at least one first pair of side support members (40, 42; 40', 42'; 40") together with the at least one beam element (70) when the at least one first pair of side support members (40, 42; 40', 42'; 40") are kept in an attached state to the first and second side walls (32, 34).

2. The battery pack (1) according to claim 1, wherein the stacking direction extends along the width direction (W) of the battery pack (1).

3. The battery pack (1) according to any one of the preceding claims, wherein at least one pair of the at least one first pair of side support members (40, 42; 40', 42'; 40") carries a plurality of said battery modules (20, 22, 24), wherein the plurality of said battery modules carried by the at least one pair of the at least one first pair of side support members (40, 42; 40', 42'; 40") are arranged one after the other along the longitudinal direction (L).

4. The battery pack (1) according to any one of the preceding claims, wherein at least one of the first and second side walls (32) comprises a support section (322, 324) for the side support member (40) which is associated with the at least one of the first and second side walls, wherein the support section is configured to guide the side support member (40) and/or to be a load bearing support for the side support member (40), wherein the support section (322, 324) has an extension in the longitudinal direction (L).

5. The battery pack (1) according to any one of the preceding claims, wherein the battery pack (1) is configured such that each one of the plurality of battery modules (20, 22, 24) is insertable into and/or removable from the housing (30) in a mounting/dismounting direction which extends along the height direction (H), such as insertable into and/or removable from the housing (30) from above in the height direction (H).

6. The battery pack (1) according to claim 5, wherein the battery pack (1) is configured such that each one of the plurality of battery modules (20, 22, 24) is insertable into and/or removable from the housing (30) in a mounting/dismounting direction which extends along the height direction (H) and such that the at least one first pair of side support members which carries or is intended to carry the respective battery module can be kept in an attached state to the first and second side walls (32, 34) while inserting and/or removing the respective battery module to/from the housing (30).

7. The battery pack (1) according to any one of the preceding claims, comprising at least two separate levels of battery modules (20, 22, 24) which are stacked on top of each other in the housing (30), as seen in the height direction (H).

8. The battery pack (1) according to claim 7, further comprising a second pair of side support members (60, 62) for carrying at least one of the battery modules (20) in the housing (30), wherein each side support member of the second pair of side support members (60, 62) is permanently attached to, such as integrated with, a respective one of the first and second side walls (32, 34).

9. The battery pack (1) according to any one of claims the preceding claims, when also being dependent on claim 2, comprising a pair of said at least one beam element (70"), wherein each beam element of the at least one pair of said at least one beam element (70") is provided on a respective lateral side of the plurality of stacked battery cells (202) of the associated battery module (24‴), as seen with respect to the width direction (W).

10. The battery pack (1) according to any one of the preceding claims, wherein the at least one beam element (70) is releasably attached to the at least one first pair of side support members (40), such as by use of at least one mechanical fastener (80).

11. A method for assembling a battery pack (1), the battery pack (1) having a longitudinal extension in a longitudinal direction (L), a width extension in a width direction (W), and a height extension in a height direction (H), the battery pack (1) comprising:
- a plurality of battery modules (20, 22, 24), wherein each battery module (20, 22, 24) comprises a plurality of battery cells (202), wherein the plurality of battery cells (202) of each battery module are stacked one after the other in a stacking direction (W),
- a housing (30), wherein the housing (30) comprises a first side wall (32) and a second side wall (34) having a respective extension in the longitudinal direction (L) and the height direction (H), and wherein the first and second side walls (32, 34) are offset from each other in the width direction (W) such that they define a space (S) therebetween for storing the plurality of battery modules (20, 22, 24),
- at least one first pair of side support members (40, 42; 40', 42'; 40'') for carrying at least one of the battery modules (20, 22, 24) in the housing (30), wherein each side support member (40, 42; 40', 42'; 40") of the least one first pair of side support members (40, 42; 40', 42'; 40") is an elongated member having an extension in the longitudinal direction (L) and being associated with a respective one of the first and second side walls (32, 34), and wherein each side support member (40, 42; 40', 42'; 40") of the least one first pair of side support members (40, 42; 40', 42'; 40'') is releasably attached to the respective one of the first and second side walls (32, 34), the method comprising:
- attaching (S1) a primary pair of the at least one first pair of side support members (40, 42; 40', 42'; 40") to the first and second side walls (32, 34) at a first position in the housing (30), as seen in the height direction (H),
- inserting (S2) at least one battery module (22) into the housing (30) such that the at least one battery module (22) reaches the first position in the housing (30) and such that the at least one battery module (22) is carried by the primary pair of the at least one first pair of side support members (40, 42; 40', 42'; 40").

12. A vehicle (100) comprising a battery pack (1) according to any one of claims 1-11.

## Patentansprüche

1. Batteriepack (1), wobei das Batteriepack (1) eine Längserstreckung in einer Längsrichtung (L), eine Breitenerstreckung in einer Breitenrichtung (W) und eine Höhenerstreckung in einer Höhenrichtung (H) aufweist, wobei das Batteriepack (1) Folgendes umfasst:
- eine Vielzahl von Batteriemodulen (20, 22, 24), wobei jedes Batteriemodul (20, 22, 24) eine Vielzahl von Batteriezellen (202) umfasst, wobei die Vielzahl von Batteriezellen (202) jedes Batteriemoduls nacheinander in einer Stapelrichtung (W) gestapelt sind,
- ein Gehäuse (30), wobei das Gehäuse (30) eine erste Seitenwand (32) und eine zweite Seitenwand (34) umfasst, die eine jeweilige Erstreckung in der Längsrichtung (L) und der Höhenrichtung (H) aufweisen, und wobei die erste und die zweite Seitenwand (32, 34) in der Breitenrichtung (W) derart voneinander versetzt sind, dass sie einen Raum (S) dazwischen zum Lagern der Vielzahl von Batteriemodulen (20, 22, 24) definieren,
- mindestens ein erstes Paar seitlicher Stützelemente (40, 42; 40', 42'; 40'') zum Tragen mindestens eines der Batteriemodule (20, 22, 24) in dem Gehäuse (30), wobei jedes seitliche Stützelement (40, 42; 40', 42'; 40'') des mindestens einen ersten Paars seitlicher Stützelemente (40, 42; 40', 42'; 40'') ein längliches Element ist, das eine Erstreckung in der Längsrichtung (L) aufweist und mit einer jeweiligen der ersten und der zweiten Seitenwand (32, 34) verbunden ist, und wobei jedes seitliche Stützelement (40, 42; 40', 42'; 40") des mindestens einen ersten Paars seitlicher Stützelement (40, 42; 40', 42'; 40'') lösbar an der jeweiligen der ersten und der zweiten Seitenwand (32, 34) befestigt ist,
wobei das Batteriepack (1) ferner mindestens ein Trägerelement (70) umfasst, das mit mindestens einer der Vielzahl von Batteriemodulen (20, 22, 24) verbunden ist, wobei das mindestens eine Trägerelement (70) eine Erstreckung in der Breitenrichtung (W) zwischen Endabschnitten (72, 74) davon aufweist, wobei das mindestens eine Trägerelement (70) über seine Endabschnitte (72, 74) von dem mindestens einen ersten Paar seitlicher Stützelemente (40, 42; 40', 42'; 40'') gestützt wird,
wobei das mindestens eine Trägerelement (70) über seine Endabschnitte (72, 74) von jeweiligen oberen Oberflächen (401) des mindestens einen ersten Paars seitlicher Stützelement (40, 42; 40', 42'; 40'') derart gestützt wird, dass das zugehörige Batteriemodul zusammen mit dem mindestens einen Trägerelement (70) von dem mindestens einen ersten Paar seitlicher Stützelement (40, 42; 40', 42'; 40'') gelöst und entfernt werden kann, wenn das mindestens eine erste Paar seitlicher Stützelement (40, 42; 40', 42'; 40") in einem mit der ersten und der zweiten Seitenwand (32, 34) befestigten Zustand gehalten wird.

2. Batteriepack (1) nach Anspruch 1, wobei sich die Stapelrichtung entlang der Breitenrichtung (W) des Batteriepacks (1) erstreckt.

3. Batteriepack (1) nach einem der vorhergehenden Ansprüche, wobei mindestens ein Paar des mindestens einen ersten Paars seitlicher Stützelement (40, 42; 40', 42'; 40") eine Vielzahl der Batteriemodule (20, 22, 24) trägt, wobei die Vielzahl der Batteriemodule, die von dem mindestens einen Paar des mindestens einen ersten Paars seitlicher Stützelement (40, 42; 40', 42'; 40'') getragen werden, nacheinander entlang der Längsrichtung (L) angeordnet sind.

4. Batteriepack (1) nach einem der vorhergehenden Ansprüche, wobei mindestens eine der ersten und der zweiten Seitenwand (32) einen Stützabschnitt (322, 324) für das seitliche Stützelement (40) umfasst, das mit der mindestens einen der ersten und der zweiten Seitenwand verbunden ist, wobei der Stützabschnitt dazu konfiguriert ist, das seitliche Stützelement (40) zu führen und/oder eine lasttragende Stütze für das seitliche Stützelement (40) zu sein, wobei der Stützabschnitt (322, 324) eine Erstreckung in der Längsrichtung (L) aufweist.

5. Batteriepack (1) nach einem der vorhergehenden Ansprüche, wobei das Batteriepack (1) derart konfiguriert ist, dass jedes der Vielzahl von Batteriemodulen (20, 22, 24) in einer Montage-/Demontagerichtung, die sich entlang der Höhenrichtung (H) erstreckt, in das Gehäuse (30) einsetzbar und/oder aus diesem entfernbar, beispielsweise von oben in der Höhenrichtung (H) in das Gehäuse einsetzbar und/oder aus diesem entfernbar, ist.

6. Batteriepack (1) nach Anspruch 5, wobei das Batteriepack (1) derart konfiguriert ist, dass jedes der Vielzahl von Batteriemodulen (20, 22, 24) in einer Montage-/Demontagerichtung, die sich entlang der Höhenrichtung (H) erstreckt, in das Gehäuse (30) einsetzbar und/oder aus diesem entfernbar ist, und derart, dass das mindestens eine erste Paar seitlicher Stützelemente, das das jeweilige Batteriemodul trägt oder dazu vorgesehen ist, dieses zu tragen, in einem mit der ersten und der zweiten Seitenwand (32, 34) befestigten Zustand gehalten wird, während das jeweilige Batteriemodul in das Gehäuse (30) eingesetzt und/oder aus diesem entfernt wird.

7. Batteriepack (1) nach einem der vorhergehenden Ansprüche, das mindestens zwei separate Ebenen von Batteriemodulen (20, 22, 24) umfasst, die, in der Höhenrichtung (H) gesehen, im Gehäuse (30) aufeinandergestapelt sind.

8. Batteriepack (1) nach Anspruch 7, das ferner ein zweites Paar seitlicher Stützelemente (60, 62) zum Tragen mindestens eines der Batteriemodule (20) im Gehäuse (30) umfasst, wobei jedes seitliche Stützelement des zweiten Paars seitlicher Stützelemente (60, 62) permanent an eine jeweilige der ersten und der zweiten Seitenwand (32, 34) befestigt ist, beispielsweise in diese integriert ist.

9. Batteriepack (1) nach einem der Ansprüche der vorhergehenden Ansprüche, wenn es auch von Anspruch 2 abhängig ist, umfassend ein Paar des mindestens einen Trägerelements (70''), wobei jedes Trägerelement des mindestens einen Paars des mindestens einen Trägerelements (70''), in Bezug auf die Breitenrichtung (W) gesehen, auf einer jeweiligen lateralen Seite der Vielzahl von gestapelten Batteriezellen (202) des zugehörigen Batteriemoduls (24‴) vorgesehen ist.

10. Batteriepack (1) nach einem der vorhergehenden Ansprüche, wobei das mindestens eine Trägerelement (70) lösbar an dem mindestens einen ersten Paar seitlicher Stützelemente (40) befestigt ist, beispielsweise durch die Verwendung mindestens eines mechanischen Befestigungselements (80).

11. Verfahren zum Zusammenbauen eines Batteriepacks (1), wobei das Batteriepack (1) eine Längserstreckung in einer Längsrichtung (L), eine Breitenerstreckung in einer Breitenrichtung (W) und eine Höhenerstreckung in einer Höhenrichtung (H) aufweist, wobei das Batteriepack (1) Folgendes umfasst:
- eine Vielzahl von Batteriemodulen (20, 22, 24), wobei jedes Batteriemodul (20, 22, 24) eine Vielzahl von Batteriezellen (202) umfasst, wobei die Vielzahl von Batteriezellen (202) jedes Batteriemoduls nacheinander in einer Stapelrichtung (W) gestapelt sind,
- ein Gehäuse (30), wobei das Gehäuse (30) eine erste Seitenwand (32) und eine zweite Seitenwand (34) umfasst, die eine jeweilige Erstreckung in der Längsrichtung (L) und der Höhenrichtung (H) aufweisen, und wobei die erste und die zweite Seitenwand (32, 34) in der Breitenrichtung (W) derart voneinander versetzt sind, dass sie einen Raum (S) dazwischen zum Lagern der Vielzahl von Batteriemodulen (20, 22, 24) definieren,
- mindestens ein erstes Paar seitlicher Stützelemente (40, 42; 40', 42'; 40'') zum Tragen mindestens eines der Batteriemodule (20, 22, 24) in dem Gehäuse (30), wobei jedes seitliche Stützelement (40, 42; 40', 42'; 40") des mindestens einen ersten Paars seitlicher Stützelemente (40, 42; 40', 42'; 40") ein längliches Element ist, das eine Erstreckung in der Längsrichtung (L) aufweist und mit einer jeweiligen der ersten und der zweiten Seitenwand (32, 34) verbunden ist, und wobei jedes seitliche Stützelement (40, 42; 40', 42'; 40") des mindestens einen ersten Paars seitlicher Stützelement (40, 42; 40', 42'; 40'') lösbar an der jeweiligen der ersten und der zweiten Seitenwand (32, 34) befestigt ist, wobei das Verfahren Folgendes umfasst:
- Befestigen (S1) eines primären Paars des mindestens einen ersten Paars seitlicher Stützelemente (40, 42; 40', 42'; 40") an der ersten und der zweiten Seitenwand (32, 34) an einer ersten Position in dem Gehäuse (30), in der Höhenrichtung (H) gesehen,
- Einsetzen (S2) mindestens eines Batteriemoduls (22) in das Gehäuse (30), derart, dass das mindestens eine Batteriemodul (22) die erste Position im Gehäuse (30) erreicht, und derart, dass das mindestens eine Batteriemodul (22) von dem primären Paar des mindestens einen ersten Paars seitlicher Stützelement (40, 42; 40', 42'; 40'') getragen wird.

12. Fahrzeug (100), das ein Batteriepack (1) nach einem der Ansprüche 1-11 umfasst.

## Revendications

1. Bloc-batterie (1), le bloc-batterie (1) ayant une extension longitudinale dans une direction longitudinale (L), une extension en largeur dans une direction de la largeur (W), et une extension en hauteur dans une direction de la hauteur (H), le bloc-batterie (1) comprenant :
- une pluralité de modules de batterie (20, 22, 24), chaque module de batterie (20, 22, 24) comprenant une pluralité de cellules d'éléments de batterie (202), la pluralité de cellules de batterie (202) de chaque module de batterie étant empilées les uns après les autres dans une direction d'empilement (W),
- un boîtier (30), le boîtier (30) comprenant une première paroi latérale (32) et une seconde paroi latérale (34) ayant une extension respective dans la direction longitudinale (L) et le sens de la hauteur (H), et les première et seconde parois latérales (32, 34) étant décalées l'une par rapport à l'autre dans le sens de la largeur (W) de sorte qu'elles définissent un espace (S) entre elles pour le stockage de la pluralité de modules de batteries (20, 22, 24),
- au moins une première paire d'éléments de support latéraux (40, 42 ; 40', 42' ; 40") pour supporter au moins un des modules de batterie (20, 22, 24) dans le boîtier (30), chaque élément de support latéral (40, 42 ; 40', 42' ; 40") de l'au moins une première paire d'éléments de support latéraux (40, 42 ; 40', 42' ; 40") étant un élément allongé ayant une extension dans la direction longitudinale (L) et étant associé à l'une respective des première et seconde parois latérales (32, 34), et chaque élément de support latéral (40, 42 ; 40', 42' ; 40") de l'au moins une première paire d'éléments de support latéraux (40, 42 ; 40', 42' ; 40") étant fixé de manière amovible à l'une respective des première et seconde parois latérales (32, 34),
le bloc-batterie (1) comprenant en outre au moins un élément de poutre (70) associé à au moins un des modules de batterie (20, 22, 24), ledit au moins un élément de poutre (70) présentant une extension dans le sens de la largeur (W) entre ses sections d'extrémité (72, 74), l'au moins un élément de poutre (70) étant supporté via ses sections d'extrémité (72, 74) par l'au moins une première paire d'éléments de support latéraux (40, 42 ; 40', 42' ; 40"),
l'élément de poutre (70) étant supporté via ses sections d'extrémité (72, 74) par des surfaces supérieures respectives (401) de l'au moins une première paire d'éléments de support latéraux (40, 42 ; 40', 42' ; 40"), de sorte que le module de batterie associé puisse être détaché et retiré de l'au moins une première paire de supports latéraux (40, 42 ; 40', 42' ; 40") avec l'au moins un élément de poutre (70) lorsque l'au moins une première paire d'éléments de support latéraux (40, 42 ; 40', 42' ; 40") sont maintenus attachés aux première et seconde parois latérales (32, 34).

2. Bloc-batterie (1) selon la revendication 1, dans lequel la direction d'empilement s'étend le long du sens de largeur (W) du bloc-batterie (1).

3. Bloc-batterie (1) selon l'une quelconque des revendications précédentes, dans lequel au moins une paire de l'au moins une première paire d'éléments de support latéraux (40, 42 ; 40', 42' ; 40") supporte une pluralité desdits modules de batterie (20, 22, 24), la pluralité desdits modules de batterie supportés par l'au moins une paire de l'au moins une première paire d'éléments de support latéraux (40, 42 ; 40', 42' ; 40") étant disposés l'un après l'autre le long de la direction longitudinale (L).

4. Bloc-batterie (1) selon l'une quelconque des revendications précédentes, dans lequel au moins l'une des première et seconde parois latérales (32) comprend une section de support (322, 324) pour l'élément de support latéral (40) qui est associée à l'au moins une des première et seconde parois latérales, la section de support étant configurée pour guider l'élément de support latéral (40) et/ou pour être un support de charge pour l'élément de support latéral (40), la section de support (322, 324) présentant une extension dans la direction longitudinale (L).

5. Bloc-batterie (1) selon l'une quelconque des revendications précédentes, le bloc-batterie (1) étant configuré de telle sorte que chacun de la pluralité de modules de batterie (20, 22, 24) puisse être inséré dans et/ou retiré du boîtier (30) dans une direction de montage/démontage qui s'étend le long du sens de la hauteur (H), par exemple insérable dans et/ou amovible du boîtier (30) depuis le haut dans le sens de la hauteur (H).

6. Bloc-batterie (1) selon la revendication 5, le bloc-batterie (1) étant configuré de telle sorte que chacun de la pluralité de modules de batterie (20, 22, 24) puisse être inséré dans et/ou retiré du boîtier (30) dans une direction de montage/démontage qui s'étend le long du sens de la hauteur (H) et de telle sorte que l'au moins une première paire d'éléments de support latéraux qui supporte ou est destinée à supporter le module de batterie respectif puisse être maintenue dans un état attaché aux première et seconde parois latérales (32, 34) pendant l'insertion et/ou le retrait du module de batterie respectif dans ou hors du boîtier (30).

7. Bloc-batterie (1) selon l'une quelconque des revendications précédentes, comprenant au moins deux niveaux séparés de modules de batterie (20, 22, 24) qui sont empilés l'un sur l'autre dans le boîtier (30), comme vu dans le sens de la hauteur (H).

8. Bloc-batterie (1) selon la revendication 7, comprenant en outre une seconde paire d'éléments de support latéraux (60, 62) pour supporter au moins l'un des modules de batterie (20) dans le boîtier (30), chaque élément de support latéral de la seconde paire d'éléments de support latéraux (60, 62) étant fixé de manière permanente à une paroi respective parmi la première et la seconde paroi latérale (32, 34), de manière à être intégrée à celle-ci.

9. Bloc-batterie (1) selon l'une quelconque des revendications précédentes, lorsqu'elles dépendent également de la revendication 2, comprenant une paire dudit au moins un élément de poutre (70"), chaque élément de poutre de ladite au moins une paire dudit au moins un élément de poutre (70") étant prévu sur un côté latéral respectif de la pluralité de cellules de batterie empilées (202) du module de batterie associé (24"'), vu par rapport au sens de la largeur (W).

10. Bloc-batterie (1) selon l'une quelconque des revendications précédentes, dans lequel l'au moins un élément de poutre (70) est fixé de manière amovible à l'au moins une première paire d'éléments de support latéraux (40), par exemple en utilisant au moins une attache mécanique (80).

11. Procédé d'assemblage d'un bloc-batterie (1), le bloc-batterie (1) ayant une extension longitudinale dans une direction longitudinale (L), une extension en largeur dans un sens de la largeur (W), et une extension en hauteur dans un sens de la hauteur (H), le bloc-batterie (1) comprenant :
- une pluralité de modules de batterie (20, 22, 24), chaque module de batterie (20, 22, 24) comprenant une pluralité de cellules de batterie (202), la pluralité de cellules de batterie (202) de chaque module de batterie étant empilées les unes après les autres dans une direction d'empilement (W),
- un boîtier (30), le boîtier (30) comprenant une première paroi latérale (32) et une seconde paroi latérale (34) ayant une extension respective dans la direction longitudinale (L) et le sens de la hauteur (H), et les première et seconde parois latérales (32, 34) étant décalées l'une par rapport à l'autre dans le sens de la largeur (W) de sorte qu'elles définissent un espace (S) entre elles pour le stockage de la pluralité de modules de batteries (20, 22, 24),
- au moins une première paire d'éléments de support latéraux (40, 42 ; 40', 42' ; 40") pour supporter au moins un des modules de batterie (20, 22, 24) dans le boîtier (30), chaque élément de support latéral (40, 42 ; 40', 42' ; 40") de l'au moins une première paire d'éléments de support latéraux (40, 42 ; 40', 42' ; 40") étant un élément allongé ayant une extension dans la direction longitudinale (L) et étant associé à l'une respective des première et seconde parois latérales (32, 34), et chaque élément de support latéral (40, 42 ; 40', 42' ; 40") de l'au moins une première paire d'éléments de support latéraux (40, 42 ; 40', 42' ; 40") étant fixé de manière amovible à la paroi respective parmi la première et la seconde paroi latérale (32, 34), le procédé comprenant :
- la fixation (S1) d'une paire primaire de l'au moins une première paire d'éléments de support latéraux (40, 42 ; 10 40', 42' ; 40") aux première et seconde parois latérales (32, 34) à une première position dans le boîtier (30), vu dans le sens de la hauteur (H),
- l'insertion (S2) d'au moins un module de batterie (22) dans le boîtier (30) de telle sorte que le module de batterie (22) atteigne la première position dans le boîtier (30) et que le module de batterie (22) soit supporté par la paire primaire de l'au moins une première paire d'éléments de support latéraux (40, 42 ; 40', 42' ; 40").

12. Véhicule (100) comprenant un bloc-batterie (1) selon l'une quelconque des revendications 1 à 11.
